# EUROPEAN PATENT SPECIFICATION

(11) **EP 4 007 322 B1**
(45) Date of publication and mention of the grant of the patent: **07.05.2025**
(21) Application number: 21207966.9
(22) Date of filing: 12.11.2021
(51) Int. Cl.: H04W 4/80, H04W 76/10, H04L 41/0803, H04W 8/00, G08B 5/36, G08B 5/38, H04L 41/08, H04L 41/0893, H04L 41/12, H04L 41/28, H04L 41/044, H04L 67/125, H04L 9/00, H04L 12/28, H04W 24/00, H04W 84/12, H04W 84/18, H04W 84/20

(54) **A METHOD AND A SYSTEM FOR CONFIGURING ONE OR MORE DEVICES**
VERFAHREN UND SYSTEM ZUR KONFIGURATION EINER ODER MEHRERER VORRICHTUNGEN
PROCÉDÉ ET SYSTÈME DE CONFIGURATION D'UN OU DE PLUSIEURS DISPOSITIFS

(30) Priority: 25.11.2020 IN 202011051283
(43) Date of publication of application: 01.06.2022
(73) Proprietor: Carrier Corporation, Palm Beach Gardens, FL 33418 (US)
(72) Inventor: SUGUMAR, Mohan, 500081 Telangana (IN); SAVALIYA, Rohit Gordhanbhai, 500081 Telangana (IN); GIREPUNJE, Saurav, 500081 Telangana (IN)
(74) Representative: Dehns

(56) References cited:
- US-A1- 2015 256 665
- US-A1- 2018 248 760

## Description

The present invention generally relates to building automation system (BAS). More particularly, the invention relates to a system and a method for configuring one or more devices installed in a building.

A number of different devices are installed in a building to maintain ambient temperature and to cater to other requirements inside the building. These devices may be air conditioners, fire detectors, chillers, variable air volume (VAV) units or other such devices. Each of these devices needs to be installed and commissioned in order to make them fully operational.

An existing method of commissioning these devices requires to manually set-up an internet protocol (IP) address, a service set identifier (SSID), a mesh ID and a password. The other existing solution to commission these devices is by using a commissioning tool used by a technician. The technician has to carry the commissioning tool to each and every device installed in the building for the purpose. Further, the technician also has to manually access each device by, say, using a ladder. Usually, there are hundreds and thousands of such devices which are installed in a building and the technician has to manually access each device for commissioning and servicing these devices. Thus, it takes several days or months for the technician to commission such devices in a building. Such a process is a time-consuming task. There is no method to configure these devices automatically without physically access them.

In view of the afore-mentioned problems, there is a need of an efficient system and a method for automatically and simultaneously configuring one or more devices in a building. There is also a requirement to substantially reduce the time taken and manual efforts made by a technician to configure these devices. In order to solve the problems in the existing solutions, a system and a method are disclosed.

US 2018/248760 A1 discloses a system comprising a plurality of replacable components connected in a wireless network under a collective ID, and at least one unconnected component available to join the network. The components are divided amongst a plurality of luminaires, each respective one of the luminaires comprising a respsective subgroup of the components including at least one lamp, and each of the subgroups having respective subgroup ID identifying the respective subgroup.

According to a first aspect there is provided a method for configuring one or more devices installed at a respective floor of a building. The method comprises the steps of establishing a connection by a mobile device operated by a person with a first device that is selected by the person from one or more devices installed at the respective floor of the building over a short-range network. The method also comprises the steps of enabling the first device to determine one or more unconfigured devices by broadcasting a discover message by the first device over the short-range network, and receiving an identity message from the one or more unconfigured devices in response to the discover message. The method comprises the steps of enabling the first device to configure the one or more unconfigured devices over the short-range network in response to determination of the one or more unconfigured devices.

Optionally, the method comprises the step of communicating the first device and the one or more unconfigured devices with different broadcast and/or unicast commands over the short-range network. The broadcast and/or unicast commands are transmitted over a data frame to configure the one or more unconfigured devices.

Optionally, the short-range network is a Wi-Fi network.

Optionally, the first device transmits an encrypted configuration information to the one or more unconfigured devices for configuring the one or more unconfigured devices. Also, the one or more unconfigured devices decrypt the encrypted configuration information.

Optionally, the first device is enabled to transmit a blink command to one or more configured devices to locate or identify the configured devices.

Optionally, the method comprises the step of changing from an unconfigured status to a configured status of the one or more unconfigured devices after configuring the one or more unconfigured devices.

Optionally, the first device is connected to a short-range network dongle for communicating with the mobile device over the short-range network.

Optionally, the first device configures the one or more unconfigured devices simultaneously and/or iteratively over the short-range network.

Optionally, the configuration of the first device by the mobile device and the configuration of the one or more unconfigured devices by the first device is performed at a data link layer.

Optionally, the first device determines the one or more unconfigured devices when the first device receives an identity message from the one or more unconfigured devices. Optionally, the first device reconfigures and/or unconfigures one or more configured devices.

Optionally, the method also comprises the steps of receiving an acknowledgment message after configuring the one or more unconfigured devices.

According to another aspect of the invention, a system for configuring one or more devices installed at a respective floor of a building is provided. The system comprises a mobile device operated by a person and a first device that is selected by the person from one or more devices installed at the respective floor of the building. The mobile device is configured to establish a connection with a first device over a short-range network. The first device is configured to determine one or more unconfigured devices by broadcasting a discover message over the short-range network. The first device is also configured to receive an identity message from the one or more unconfigured devices in response to the discover message. The first device is also configured to configure the one or more unconfigured devices in response to receiving the identity message.

Optionally, the mobile device communicates with the first device and the one or more unconfigured devices with different broadcast and/or unicast commands over the short-range network. Also, the broadcast and/or unicast commands are transmitted over a data frame to configure the one or more unconfigured devices.

Optionally, the mobile device enables the first device to reconfigure and/or unconfigure one or more configured devices.

Optionally, the first device transmits an encrypted configuration information to the one or more unconfigured devices for configuring the one or more unconfigured devices. The one or more unconfigured devices decrypt the encrypted configuration information.

Optionally, the first device is configured to change from an unconfigured status to a configured status of the one or more unconfigured devices after configuring the one or more unconfigured devices.

Optionally, the configuration of the first device by the mobile device and the configuration of the one or more unconfigured devices by the first device is performed at a data link layer.

According to another aspect of the invention, a computer readable medium is provided for configuring one or more devices installed at a respective floor of a building. The computer readable medium comprises one or more processors and a memory is coupled to the one or more processors, the memory stores instructions executed by the one or more processors. The one or more processors are configured to connect a first device that is selected by a person from one or more devices installed at the respective floor of the building to a mobile device operated by the person over a short-range network and to determine one or more unconfigured devices by broadcasting a discover message by the first device over the short-range network. The one or more processors are also configured to receive an identity message from the one or more unconfigured devices in response to the discover message and configure the one or more unconfigured devices over the short-range network in response to receiving the identity message.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description which discloses exemplary embodiments of the invention by way of example only and with reference to the accompanying drawings in which:
Figure 1A depicts a system architecture.
Figure 1B depicts a communication between a mobile device and a first device.
Figure 1C depicts a signaling diagram between a first device and one or more configured/unconfigured devices.
Figures 1D to 1I depict screenshots of an interface of an application in the mobile device.
Figure 2 depicts a block diagram of different components of a mobile device.
Figure 3 depicts a block diagram of different components of a first device.
Figure 4 depicts a flowchart illustrating a method implemented by a mobile device to perform the invention.
Figure 5 depicts a flowchart illustrating a method implemented by a first device to perform the invention.
Corresponding reference numerals indicate corresponding parts throughout the drawings.

Described herein is the technology with a system and a method for configuring one or more devices. One or more devices are installed in each floor of a building. These devices, if are currently unconfigured, can be configured by a mobile device operated by using an application. The mobile device establishes a connection with a first device from the one or more devices using a short-range network. The mobile device may be operated by a person/technician who can use the application in the mobile device to connect with the first device. Once the connection with the first device is established, the first device is enabled to communicate with rest of unconfigured devices installed in the building. The communication between the first device and the unconfigured devices takes place through the short-range network. Several different kinds of messages can be exchanged between the first device and the unconfigured devices to configure the unconfigured devices in the building. The explanation of these messages have been provided below in detail.

As used herein, the one or more devices may be installed in a building and may comprise a first device, one or more configured devices, and one or more unconfigured devices. The first device may be considered as a master device which is connected directly with the mobile device through the short-range network. The one or more configured devices may be devices which are already or previously configured by a technician/person. The one or more unconfigured devices may be devices which are unconfigured and are yet to be configured by the first device. These one or more unconfigured devices may be considered as slave devices communicating with the first device (which may be considered as a master device) through the short-range network. The first device, the one or more configured devices and the one or more unconfigured devices may communicate with each other through BACnet communication protocol used for building automation and control (BAC) networks which is well known in the art. In an exemplary embodiment, each of the first device and the one or more unconfigured devices is a controller of a heating, ventilating, and air-conditioning control (HVAC) system, a chiller system, a lighting control system, an access control system, and a fire detection system and their associated equipment. The first device may be already configured device or can be configured to be used as a gateway or an access point using the application to communicate with the one or more unconfigured devices.

As used herein, the short-range network may be a WiFi network, a bluetooth network, a ZigBee network, a near-field communication network, or any such network that is known or obvious to a person skilled in the art.

Throughout the specification, reference numeral 106 depicts all devices. The reference numerals 106A-106E (106) may be considered as separate devices. Similarly, throughout the specification, reference numeral 104 depicts all floors. The reference numerals 104A-104D (104) may be considered as a separate floor.

The network described herein may use a message format as per the technological requirement/protocol of the network. As an example, for Wi-Fi network the message format is the one used as a 802.11 Data Frame comprising a header and a payload. The message format used herein is configured in the payload of the 802.11 data frame. The present invention uses novel message format in the payload as will be described herein below.

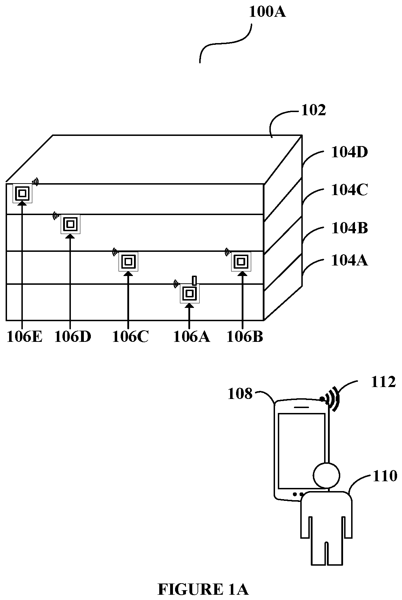

Figure 1A depicts an exemplary system architecture 100A. As depicted in Figure 1A, a building/premises 102 may have a first floor 104A, a second floor 104B, a third floor 104C and a fourth floor 104D. Each of the floor 104 may have one or more devices 106. As can be seen in Figure 1A, on the first floor 104A, one device 106A may be installed and on the second floor 104B, two devices 106B and 106C may be installed. Similarly, on the third floor 104C, one device 106D may be installed and on the fourth floor 104D, one device 106E may be installed. Although, the building 102 has only four floors 104A-104D; however, it is understood for a person skilled in the art that the building 102 may have more or less number of floors. Likewise, only five devices 106A-106E have been shown in the floors 104 of the building 102 for brevity, however, it is understood for a person skilled in the art that any number of devices may be present at each floor 104.

Further, a mobile device 108 having an application may be operated by a person/technician 110 and is connected with a short-range network 112.

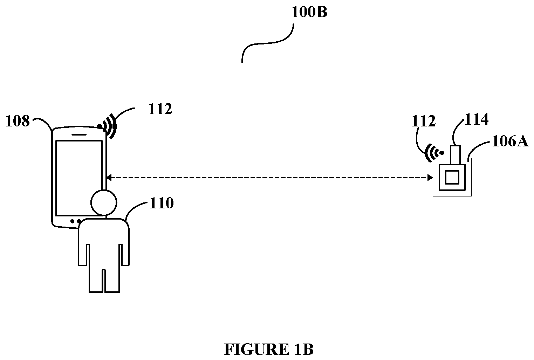

Furthermore, the person 110 selects any device from the one or more devices 106 installed at the respective floor 104 of the building 102 to connect with the mobile device 108. For this, the person 110 may make any device as a first/master device by connecting or plugging-in a dual in-line package (DIP) switch or a hardware switch to that particular device. Thereby, such device can act as an access point. The selected device by the person 110 can thus be connected to the mobile device 108 and is referred hereinafter as a first device. Considering an example where the person 110 selects the device 106A installed at the first floor 104A for connecting the mobile device 108 with the device 106A and thus called a first device 106A or a master device. The connection between the first device 106A and the mobile device 108 is password protected. Although, the person 110 has selected the device 106A as the first device from the one or more device 106A-106E; however, it is understood for a person skilled in the art that any other device from the one or more device 106A-106E can also be chosen as the first device. The communication between the mobile device 108 with the first device 106A has been explained in Figure 1B below.

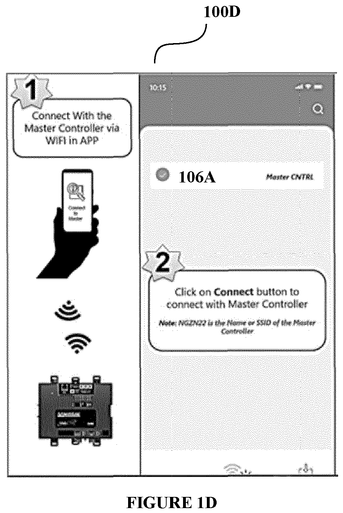

Figure 1B depicts an exemplary communication 100B between the mobile device 108 and the first device 106A. As depicted in Figure 1B, the mobile device 108 is connected with a short-range network 112. Further, the first device 106A (the master device) is connected to a short-range dongle 114 which provides a short-range network 112 to the first device 106A to communicate with the mobile device 108. In an exemplary embodiment, the short-range dongle 114 is a Wi-Fi dongle. Using the short-range network 112, the mobile device 108 may establish a connection with the first device 106A. To establish the connection with the first device 106A, the person 110 may use the application stored and executing in the mobile device 108 to connect with the selected first device 106A. Figure 1D depicts an interface of the application showing a "Connect" button to establish a connection between the mobile device 108 to the first device 106A. Further, communication between the mobile device 108 and the first device 106A is through REST (Representational State Transfer) API (Application Programming Interface) via XML/HTML (Extensible Markup Language or Hyper Text Markup Language) format. The first device 106A has an in-built web server and that can be accessed by a web browser or the application in the mobile device 108 to configure the first device 106A.

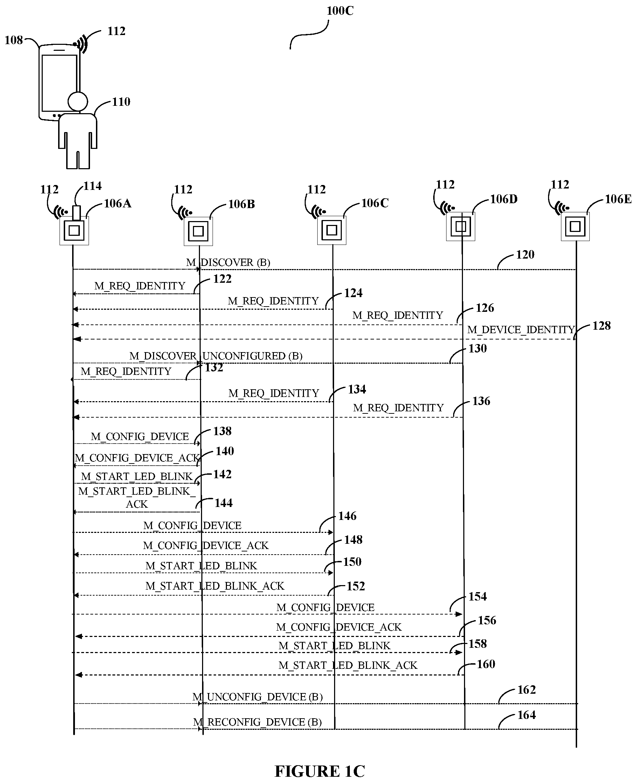

In an exemplary embodiment, the first device 106A can be an already configured device or an unconfigured device. In case the first device 106A is an already configured device, the person 110 may use the application in the mobile device 108 to enable the first device 106A to configure other one or more devices 106B-106E. And, if the first device 106A is an unconfigured device, the person 110 may use the application in the mobile device 108 to first configure the first device 106A and then enable the first device 106A to configure other one or more unconfigured devices 106B-106E (or slave devices). In an exemplary embodiment, the first device 106A is configured using the application in the mobile device 108 or by connecting or plugging-in a dual in-line package (DIP) switch or a hardware switch to the first device 106A. The details on how the first device 106A configures the other one or more devices 106B-106E is provided in Figure 1C below.

Figure 1C depicts an exemplary signalling diagram 100C between the first device 106A and the one or more devices 106B-106E. Once the mobile device 108 is connected with the first device 106A through the short-range network 112, the person 110 may use the application in the mobile device 108 to enable the first device 106A to configure other one or more devices 106B-106E.

After the mobile device 108 connects with the first device 106A, the first device 106A may broadcast a network name (SSID). Other devices 106B-106E may monitor wireless traffic over the air and extract the network name broadcasted by the first device 106A. Once the devices 106B-106E extract the network name, the devices 106B-106E may then connect with the same network 112. This wireless connection may be an open connection, that is, there is no passphrase/password to connect but data exchange happens securely using a symmetric key. Thus, each of the one or more devices 106B-106E may also be connected with the first device 106A through the short-range network.

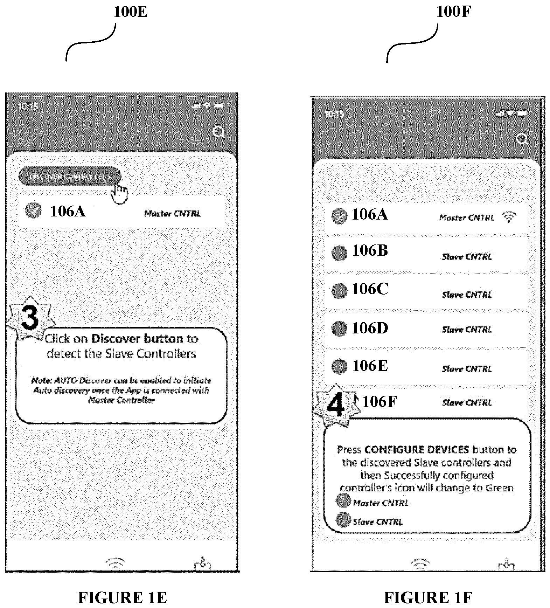

At step 120, the first device 106A may broadcast a M_DISCOVER message to all other one or more devices 106B-106E through the short-range network 112. This may be done when the person 110 selects an *"Auto Discovery Mode"* provided in the application to discover all configured and the unconfigured devices 106 in the building 102. Further, the person 110 may select the *"Auto Discovery Mode"* after the mobile device 108 is connected to the first device 106A. Figure 1E depicts an interface of the application executing on the mobile device 108 showing a "Discover" button to discover all configured and the unconfigured devices 106.

Table 1 below describes contents of or information present in the M_DISCOVER message. The M_DISCOVER message contains a hardware address of the first device 106A and padding bytes.

**Table 1**

| **Contents of M_DISCOVER message** |
|---|
| M_IE_HARDWARE_ADDR |
| M_IE_PAD_BYTES |

At step 122, in response to the M_DISCOVER message, the device 106B transmits a M_REQ_IDENTITY message (i.e. an identity message) to the first device 106A through the short-range network 112. Table 2 below describes contents of or information in the M_REQ_IDENTITY message. The M_ REQ_IDENTITY message contains a hardware address of the device 106B, a vendor identifier of the device 106B, a device identifier of the device 106B, a serial number of the device 106B, a location of the device 106B and padding bytes.

**Table 2**

| **Contents of M_REQ_IDENTITY message** |
|---|
| M_IE_HARDWARE_ADDR |
| M_IE_VENDOR_ID |
| M_IE_DEVICE_ID |
| M_IE_SERIAL_NUM |
| M_IE_DEVICE_LOCATION |
| M_IE_PAD_BYTES |

In the similar manner, at step 124, in response to the M_DISCOVER message, the device 106C transmits a M_REQ_IDENTITY message to the first device 106A through the short-range network 112. At step 126, in response to the M _DISCOVER message, the device 106D transmits a M_REQ_IDENTITY message to the first device 106A through the short-range network 112.

And, at step 128, in response to the M_DISCOVER message, the device 106E transmits a M_DEVICE_IDENTITY message to the first device 106A through the short-range network 112. Table 3 below describes contents of or information in the M _DEVICE_IDENTITY message. As the device 106E is an already configured device, the M_ DEVICE_IDENTITY message sent by the device 106E contains a hardware address of the configured device 106E, a vendor identifier of the configured device 106E, a device identifier of the configured device 106E, a serial number of the configured device 106E, a location of the configured device 106E, an internet protocol (IP) address of the configured device 106E, credentials of the configured device 106E and padding bytes.

**Table 3**

| **Contents of M_DEVICE_IDENTITY message** |
|---|
| M_IE_HARDWARE_ADDR |
| M_IE_VENDOR_ID |
| M_IE_DEVICE_ID |
| M_IE_SERIAL_NUM |
| M_IE_DEVICE_LOCATION |
| M_IE_IP_PARA |
| M_IE_CRED |
| M_IE_PAD_BYTES |

When the first device 106A receives the M_REQ_IDENTITY message and/or the M_DEVICE_IDENTITY message from all devices 106B-106E, the first device 106A may identify unconfigured devices 106B-106D and configured device 106E based on the configuration status of such devices 106. For an instance, the first device 106A identifies that the device 106E is a configured device and other devices 106B-104D are unconfigured devices.

At step 130, the first device 106A may also broadcast a M_DISCOVER_UNCONFIGURED message to all the one or more unconfigured devices 106B-106D through the short-range network 112. This is done when the person 110 selects an *"Start Discovering Un-configured"* provided in the application to discover all the unconfigured devices 106 in the building 102. This step 130 is different from the step 120 as at step 120, all the configured and unconfigured devices are discovered by the first device 106A and at step 130, only the unconfigured devices discovered by the first device 106A. When the device 106A broadcasts the M_DISCOVER_UNCONFIGURED message, the configured device 106E does not respond as this message is only intended for the unconfigured devices 106B-106D.

Table 4 below describes contents of or information in the M_DISCOVER_UNCONFIGURED message. The M_DISCOVER_UNCONFIGURED message contains a hardware address of the first device 106A and padding bytes.

**Table 4**

| **Contents of M_DISCOVER_UNCONFIGURED message** |
|---|
| M_IE_HARDWARE_ADDR |
| M_IE_PAD_BYTES |

At step 132, in response to the M_DISCOVER_UNCONFIGURED message, the unconfigured device 106B transmits a M_REQ_IDENTITY message (i.e. an identity message) to the first device 106A through the short-range network 112. The contents of the M_REQ_IDENTITY message is explained above in table 2.

In the similar way, at step 134, the unconfigured device 106C transmits a M _REQ_IDENTITY message to the first device 106A through the short-range network 112. At step 136, in response to the M_DISCOVER_UNCONFIGURED message, the unconfigured device 106D transmits a M_REQ_IDENTITY message to the first device 106A through the short-range network 112. When the first device 106A receives the M_REQ_IDENTITY message from all unconfigured devices 106B-106D, the first device 106A may then communicate only with the unconfigured devices 106B-104D.

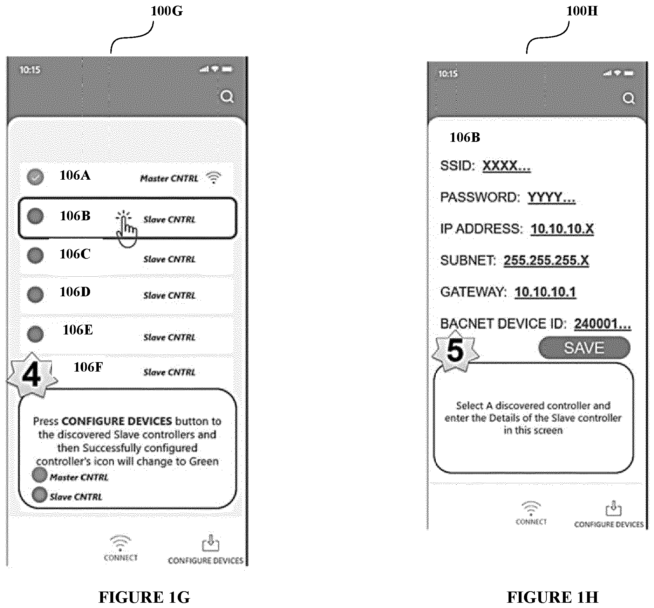

At step 138, the first device 106A may transmit (unicast) a M_CONFIG_DEVICE message to the unconfigured device 106B through the short-range network 112. For this, the person 110 may enter a configuration information (such as password etc.) in the application stored in the mobile device 108 and subsequently click on a "Save" option provided in the application. This message enables the first device 106A to transmit an encrypted configuration information to the unconfigured device 106B. Such an encrypted configuration information may comprise, but is not limited to, an internet protocol (IP) subnet address, a default gateway, a location, and/or credentials/password. Figure 1F depicts an interface of the application showing a "Configure Devices" button to configure one or more unconfigured devices 106B-106E. Figure 1G depicts an interface of the application showing a selection of the unconfigured device 106B by the person 110 to configure this device 106B. Figure 1H depicts an interface of the application showing the person 110 entering the configuration information in the application and showing a "Save" button for saving the configuration information.

When the unconfigured device 106B receives the M_CONFIG_DEVICE message, the unconfigured device 106B may decrypt the encrypted configuration information and implement the decrypted configuration information. Implementing the configuration information by the unconfigured device 106B would configure the unconfigured device 106B. The first device 106A may transmit the same configuration information to the unconfigured device 106B which is also used by the first device 106A as its configuration information. In other words, the first device 106A and the unconfigured device 106B may be configured using the same configuration information. Different configuration information may also be used for configuring the first device 106A and the unconfigured device 106B. Also, the configuration information is encrypted and decrypted using symmetric key algorithms to help in data security that is well known in the art.

Table 5 below describes contents of or information in the M_CONFIG_DEVICE message. The M _CONFIG _DEVICE message contains a hardware address of the device 106B, a device identifier of the device 106B, a serial number of the device 106B, a location of the device 106B, an internet protocol (IP) address, credentials, and padding bytes.

**Table 5**

| **Contents of M_CONFIG_DEVICE message** |
|---|
| M_IE_HARDWARE_ADDR |
| M_IE_DEVICE_ID |
| M_IE_SERIAL_NUM |
| M_IE_DEVICE_LOCATION |
| M_IE_IP_PARA |
| M_IE_CRED |
| M_IE_PAD_BYTES |

At step 140, in response to the M_CONFIG DEVICE message, the unconfigured device 106B may transmit a M_CONFIG_DEVICE_ACK message to the first device 106A through the short-range network 112. The M_CONFIG_DEVICE_ACK message may provide an acknowledgment to the first device 106A that the unconfigured device 106B has implemented the configuration information and thus, has now become a configured device.

Table 6 below describes contents of or information present in the M_CONFIG_DEVICE_ACK message. The M_CONFIG_DEVICE_ACK message contains a hardware address of the device 106B, a device identifier of the device 106B, a serial number of the device 106B, a location of the device 106B, an internet protocol (IP) address, credentials, and padding bytes.

**Table 6**

| **Contents of M_CONFIG_DEVICE_ACK message** |
|---|
| M_IE_HARDWARE_ADDR |
| M_IE_DEVICE_ID |
| M_IE_SERIAL_NUM |
| M_IE_DEVICE_LOCATION |
| M_IE_IP_PARA |
| M_IE_CRED |
| M_IE_PAD_BYTES |

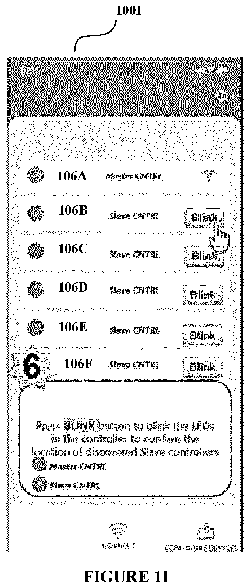

At step 142, the first device 106A may transmit (unicast) a M_START_LED_BLINK message to the configured device 106B through the short-range network 112. When the person 110 initiates LED blink sequence from the application, the M_START_LED_BLINK message enables the first device 106A to unicast a message to configured device 106B to locate or identify newly configured device 106B. Figure 1I depicts an interface of the application showing a "Blink" button which the person 110 selects for locating and identifying the configured device 106B in the building 102.

Table 7 below describes contents of or information in the M_START_LED_BLINK message. The M_START_LED_BLINK message contains a hardware address of the device 106B, a device identifier of the device 106B, a serial number of the device 106B and padding bytes.

**Table 7**

| **Contents of M_START_LED_BLINK message** |
|---|
| M_IE_HARDWARE_ADDR |
| M_IE_DEVICE_ID |
| M_IE_SERIAL_NUM |
| M_IE_PAD_BYTES |

At step 144, in response to the M_START_LED_BLINK message, the unconfigured device 106B may start blinking on receiving the M_START_LED_BLINK message (i.e. a blink command) and may also transmit a M_START_LED_BLINK_ACK message to the first device 106A through the short-range network 112. The M_START_LED_BLINK_ACK message may provide an acknowledgment to the first device 106A that the M_START_LED_BLINK is successfully received by the configured device 106B.

Table 8 below describes contents of or information in the M_START_LED_BLINK_ACK message. The M_START_LED_BLINK_ACK message contains a hardware address of the device 106B, a device identifier of the device 106B, a serial number of the device 106B and padding bytes.

**Table 8**

| **Contents of M_START_LED_BLINK_ACK message** |
|---|
| M_IE_HARDWARE_ADDR |
| M_IE_DEVICE_ID |
| M_IE_SERIAL_NUM |
| M_IE_PAD_BYTES |

In the same manner, from step 146 to step 152, the unconfigured device 106C can be configured and starts blinking by sharing the messages as explained above for the unconfigured device 106B. Similarly, from step 154 to step 160, the unconfigured device 106D can be configured and starts blinking.

After configuring the unconfigured devices 106B-106D, the first device 106A may change from an unconfigured status to a configured status of the unconfigured device 106B-106D as these devices 106B-106D have been successfully configured by the first device 106A.

All the messages between the first device 106A and the mobile device 108 as well as between the first device 106A and the configured as well unconfigured device 106B-106E are exchanged (either unicast or broadcast over a data frame to configure the one or more unconfigured devices) using a data link layer through their respective short-range network 112. Thus, the present invention also encompasses the first device 106A and the application in the mobile device 108 to perform the configuration of the one or more unconfigured devices 106B-106D by the first device 106A at the data link layer.

Thereby, the present invention enables the first device 106A to simultaneously and/or iteratively configure the one or more unconfigured devices 106B-106D over the short-range network 112. By configuring all the unconfigured devices 106B-106D through the first device 106A, there is no need to manually configure each device 106 and the time taken for configuring these devices 106B-106C is reduced to a larger extent. The present invention also solves accessibility problems, for instance eliminates the need to use a ladder by the person 110 to configure these device 106B-106D as these devices can be configured using the application in the mobile device 108.

The present invention further encompasses the person 110 to unconfigure an already configured device 106E. For this, the person 110 may open the application in the mobile device 108 and may enable the first device 106A to unconfigure the already configured device 106E. At step 162, the first device 106A may transmit a M_UNCONFIG_DEVICE message to the already configured device 106E and upon receiving the M_UNCONFIG_DEVICE message, the already configured device 106E may uninstall already implemented configuration information for becoming an unconfigured device.

The present invention further encompasses the person 110 to reconfigure an already configured device 106E. For this, the person 110 may open the application in the mobile device 108 and may enable the first device 106A to reconfigure the already configured device 106E. At step 164, the first device 106A may transmit a M_RECONFIG_DEVICE message to the already configured device 106E and upon receiving the M_RECONFIG_DEVICE message, the already configured device 106E may be reconfigured by the person 110 by implementing new configuration information on the configured device 106E.

Table 9 below describes contents of or information in the M_UNCONFIG_DEVICE message. The M_UNCONFIG_DEVICE message contains a hardware address of the device 106E, a device identifier of the device 106E, a serial number of the device 106E and padding bytes.

**Table 9**

| **Contents of M_UNCONFIG_DEVICE message** |
|---|
| M_IE_HARDWARE_ADDR |
| M_IE_DEVICE_ID |
| M_IE_SERIAL_NUM |
| M_IE_PAD_BYTES |

Each of the above explained Wi-Fi data link layer messages exchanged between the first device 106A and the one or more configured and unconfigured devices 106B-106E may have the following message format as provided in Table 10 below.

**Table 10**

| **Byte** | **Message Format** |
|---|---|
| 8 | Magic Bytes (Sequence bytes with value 0x33 followed by 'Start of message') |
| 20 | Serial Number of First Device 106A |
| 20 | Serial Number of Unconfigured/Configured Device |
| | (All are set 1 during broadcast) |
| 1 | Message Type |
| 2 | Message Data Length |
| 4 | Sequence Number of Packet |
| X | Message Data (may contain multiple *Information elements*) |
| 2 | Frame Check Sum |

Further, each of the above explained Wi-Fi data link layer messages exchanged between the first device 106A and the one or more configured and unconfigured devices 106B-106E may have the following message address format as provided in Table 11 below.

**Table 11**

| | **Message Type Format** | | | | | | | |
|---|---|---|---|---|---|---|---|---|
| Bits | BIT7 | BIT6 | BIT5 | BIT4 | BIT3 | BIT2 | BIT1 | BIT0 |
| | Ack / Nack | 7 Bit Message Code | | | | | | |

Table 12 provided below depicts magic bytes (8 bytes) format which is part of the message format as explained in Table 10 above.

**Table 12**

| **Byte** | **Magic Bytes** |
|---|---|
| 1 | 0x33 |
| 2 | 0x33 |
| ... | |
| 7 | 0x33 |
| | |
| 8 | Start of Message (0x4D) |

Table 13 provided below shows a fixed length information element which is part of the message format as explained in Table 10 above.

**Table 13**

| **Byte** | **Information Element Format** |
|---|---|
| 1 | Information Element Code |
| X | Fixed Length Data |

Table 14 provided below shows a variable length information element which is part of the message format as explained in Table 10 above.

**Table 14**

| **Byte** | **Information Element Format** |
|---|---|
| 1 | Information Element Code |
| 1 | Data Length |
| X | Data |

Table 15 provided below shows details on different information elements which is part of the message format as explained in Table 10 above.

**Table 15**

| **Information Element** | **Description** | **Type** [FL: Fixed Length VL: Variable Length] | **Length** / **Maximu m Length** |
|---|---|---|---|
| M_IE_TRANS_ID | Transaction Identification | FL | 4 |
| M_IE_VENDOR_ID | Vendor ID of Device 106 | FL | 2 |
| M_IE_DEVICE_ID | Mobile Device 108 ID | FL | 4 |
| M_IE_SERIAL_NUM | Serial Number of Device 106 | VL | 50 |
| M_IE_LOCATION_N AME | Location Name of Device 106 | VL | 50 |
| M_IE_IP_PARA | IP address, Subnet Mask, Default Gateway | FL | 4 |
| M_IE_HARDWARE_A DDR | MAC Address | FL | 6 |
| M_IE_TRANS_STAT US | Transaction Status | FL | 1 |
| MI_IE_CRED | Credentials: SSID/Mesh ID and Password for wireless connection | VL | 70 |
| M_IE_PAD_BYTES | To add Pad bytes to make Ethernet message length at least minimum of 64 bytes | VL | 255 |

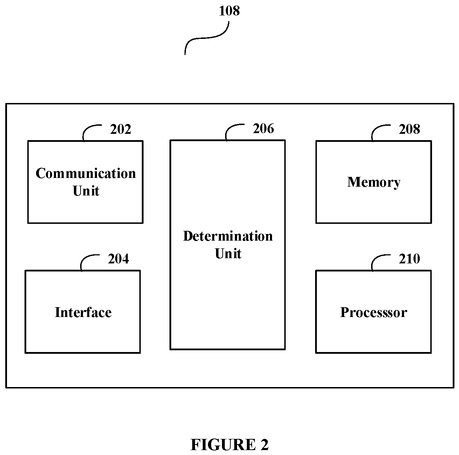

Figure 2 depicts a block diagram of different components of a mobile device 108. The mobile device 108 may comprise of, but is not limited to, a communication unit 202, an interface 204, a determination unit 206, a memory 208, and/or a processor 210. The communication unit 202 may be adapted to establish a connection with a first device 106A through a short-range network 112. The communication unit 202 may also be adapted to communicate messages (as explained above) to the first device 106A through the short-range network 112. The interface 204 may be adapted to display an interface of an application using which any device can be selected by a person 110 as a first device as explained above. Using the interface 204, the first device 106A may be enabled to communicate with other devices 106B-106E as discussed above. The determination unit 206 may be adapted to determine configured and unconfigured devices 106B-106E based on a M_REQ_IDENTITY and/or a M_DEVICE_IDENTITY messages from the configured and unconfigured devices 106B-106E. The memory 208 may be adapted to store the application through which the mobile device 108 and the first device 106A communicates. The processor 210 may be adapted to perform functions/operations as discussed herein.

Moreover, the communication unit 202, the interface 204, the determination unit 206, and the memory 208 may be communicably coupled with the processor 210. The different units described herein are exemplary. The invention may be performed using one or more units. For example, the tasks executed by the communication unit 202, the interface 204, the determination unit 206, and the memory 208 and/or the processor 210 may be performed by a single unit. Alternatively, more number of units as described herein may be used to perform the present invention.

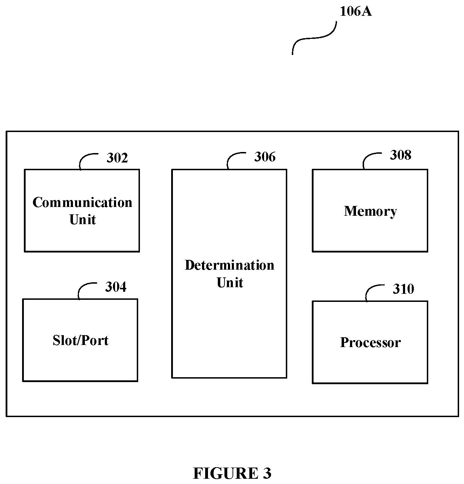

Figure 3 depicts block diagram of different components of an exemplary first device 106A. The first device 106A may comprise of, but is not limited to, a communication unit 302, a slot/port 304, a determination unit 306, a memory 308, and/or a processor 310. The communication unit 302 may be adapted to establish a connection with one or more configured and unconfigured 106B-106E through a short-range network 112. The communication unit 202 may also be adapted to communicate messages (as explained above) to the one or more configured and unconfigured devices 106B-106E through the short-range network 112. The slot/port 304 may be adapted to receive a short-range dongle (i.e. WiFi dongle) for providing the short-range network 112 to the first device 106A. The determination unit 306 may be adapted to determine the configured and unconfigured devices 106B-106E based on a M_REQ_IDENTITY and/or a M_DEVICE_IDENTITY messages received by the first device 106A from the configured and unconfigured devices 106B-106E. The memory 308 may be adapted to store configuration status of each of the configured and unconfigured 106B-106E. The processor 310 may be adapted to perform operations as discussed herein. It is to be noted that the other configured and unconfigured devices 106B-106E may comprise a communication unit, a slot/port, a determination unit, a memory and/or a processor working in the similar way as that of components/modules of the first device 106A. The determination unit 306 in Figure 3 have functions similar to determination unit 206 of Figure 2. It may be a design choice whether to include the determination unit in the mobile device 108 or the first device 108 or both.

Moreover, the communication unit 302, the slot/port 304, the determination unit 306, and/or the memory 308 may be communicably coupled with the processor 310. The different units described herein are exemplary. The invention may be performed using one or more units. For example, the tasks executed by the communication unit 302, the slot/port 304, the determination unit 306, the memory 308 and/or the processor 310 may be performed by a single unit. Alternatively, more number of units as described herein may be used to perform the present invention.

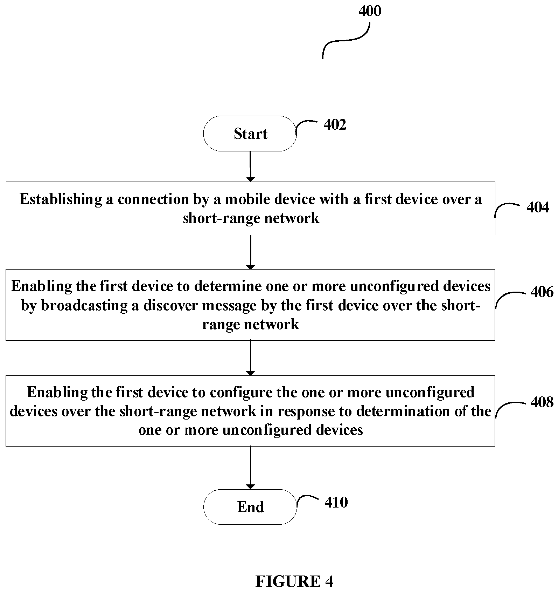

Figure 4 depicts a flowchart. The method flowchart 400 describes a method being performed by a mobile device 108 for configuring one or more unconfigured devices 106B-106D. The method flowchart 400 starts at step 402.

At step 404, an application in the mobile device 108 may establish a connection with a first device 106A over a short-range network 112. This has been discussed in greater details in Figures 1A, 1B and 1C above.

At step 406, the application in the mobile device 108 may enable the first device 106A to determine one or more unconfigured devices 106B-106D by broadcasting a discover message (i.e. M_DISCOVER_UNCONFIGURED) by the first device 106A over the short-range network 112. This has been discussed in greater details in Figures 1A, 1B and 1C above.

At step 408, the application in the mobile device 108 may enable the first device 106A to configure the one or more unconfigured devices 106B-106D over the short-range network 112 in response to determination of the one or more unconfigured devices 106B-106D. This has been discussed in greater details in Figures 1A, 1B and 1C above. Then, the method flowchart 400 may end at 410.

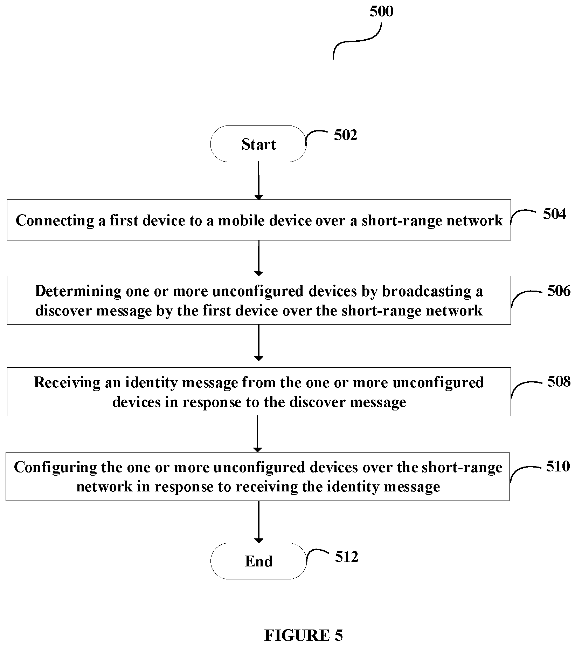

Figure 5 depicts a flowchart. The method flowchart 500 describes a method being performed by a first device 106A for configuring one or more unconfigured devices 106B-106D. The method flowchart 500 starts at step 502.

At step 504, the first device 106A may connect to a mobile device 108A over a short-range network 112. This has been discussed in greater details in Figures 1A, 1B and 1C above.

At step 506, the first device 106A may determine one or more unconfigured devices 106B-106D by broadcasting a discover message (i.e. M_DISCOVER_UNCONFIGURED) by the first device 106A over the short-range network 112. This has been discussed in greater details in Figures 1A, 1B and 1C above.

At step 508, the first device 106A may receive an identity message (i.e. M_REQ_IDENTITY) from the one or more unconfigured devices 106B-106D in response to the discover message. This has been discussed in greater details in Figures 1A, 1B and 1C above.

At step 510, the first device 106A may configure the one or more unconfigured devices 106B-106D over the short-range network 112 in response to receiving the identity message. This has been discussed in greater details in Figures 1A, 1B and 1C above. Then, the method flowchart 500 may end at 512.

In one embodiment of the invention, the invention can be operated using the one or more computer readable devices. The one or more computer readable devices can be associated with a first device 106A. A computer readable medium comprises one or more processors and a memory coupled to the one or more processors, the memory stores instructions executed by the one or more processors. The one or more processors configured to connect a first device 106A to a mobile device 108 over a short-range network 112 and to determine one or more unconfigured devices 106B-106D by broadcasting a discover message by the first device 106A over the short-range network 112. The one or more processors are also configured to receive an identity message from the one or more unconfigured devices 106B-106D in response to the discover message. The one or more processors are also configured to configure the one or more unconfigured devices 106B-106D over the short-range network 112 in response to receiving the identity message.

The present invention is applicable in various industries/fields such as, but is not limited to, banking industry, hospitality industry, housing industry, building/construction industry, offices, universities, hospitals, colleges, homes and any such industry/field that is well known in the art and where the devices 106 are used.

The embodiments of the invention discussed herein are exemplary and various modification and alterations to a person skilled in the art are within the scope of the invention as defined by the claims.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purpose or special purpose computing system environments, configurations, or devices.

Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures and described herein. Other examples of the invention may include different computer-executable instructions or components having more or less functionality than illustrated and described herein. Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of the invention, as defined by the claims.

As it employed in the subject specification, the term "controller" can refer to substantially any processor or computing processing unit or device comprising, but not limited to comprising, a direct digital control of a HVAC system, a zone controller of the HVAC system, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantumdot based transistors, switches and gates, in order to optimize space usage or enhance performance of user equipment. A processor may also be implemented as a combination of computing processing units.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C".

Having described aspects of the invention in detail, it will be apparent that modifications and variations are possible without departing from the scope of aspects of the invention as defined in the appended claims. As various changes could be made in the above constructions, products, and methods without departing from the scope of the invention as defined in the claims, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

## Claims

1. A method for configuring one or more devices (106) installed at a respective floor (104) of a building (102), the method comprising:
- establishing a connection by a mobile device (108) operated by a person (110) with a first device (106A) that is selected by the person (110) from one or more devices (106) installed at the respective floor (104) of the building (102) over a short-range network (112);
- after the mobile device connects to the first device, determining one or more unconfigured devices (106B-106D) by broadcasting a discover message by the first device (106A) over the short-range network (112);
- receiving an identity message from the one or more unconfigured devices (106B-106D) in response to the discover message; and
- configuring the one or more unconfigured devices (106B-106D) over the short-range network (112) in response to determination of the one or more unconfigured devices (106B-106D).

2. The method of claim 1, comprising enabling the first device (106A) to determine the one or more unconfigured devices (106B-106D) by broadcasting the discover message by the first device (106A) over the short-range network (112) and enabling the first device (106A) to configure the one or more unconfigured devices (106B-106D) over the short-range network (112) in response to determination of the one or more unconfigured devices (106B-106D).

3. The method of claim 1 or 2, comprising, communicating with the first device (106A) and the one or more unconfigured devices (106B-106D) with different broadcast and/or unicast commands over the short-range network (112), wherein the broadcast and/or unicast commands are transmitted over a data frame to configure the one or more unconfigured devices (106B-106D).

4. The method of any preceding claim, wherein the short-range network (112) is a Wi-Fi network.

5. The method of any preceding claim, wherein the first device (106A) transmits an encrypted configuration information to the one or more unconfigured devices (106B-106D) for configuring the one or more unconfigured devices (106B-106D), wherein the one or more unconfigured devices (106B-106D) decrypt the encrypted configuration information.

6. The method of any preceding claim, comprising receiving an acknowledgment message after configuring the one or more unconfigured devices (106B-106D) and/or changing from an unconfigured status to a configured status of the one or more unconfigured devices (106B-106D) after configuring the one or more unconfigured devices (106B-106D).

7. The method of any preceding claim, comprising, enabling the first device (106A) to transmit a blink command to one or more configured devices (106B-106E) to locate or identify the configured devices (106B-106E).

8. The method of any preceding claim, wherein the first device (106A) is connected to a short-range network dongle for communicating with the mobile device (108) over the short-range network (112).

9. The method of any preceding claim, wherein the first device (106A) configures the one or more unconfigured devices (106B-106D) simultaneously and/or iteratively over the short-range network (112).

10. The method of any preceding claim, wherein, if the first device (106A) is an unconfigured device, the mobile device (108) first configures the first device (106A); and wherein the configuration of the first device (106A) by the mobile device (108) and the configuration of the one or more unconfigured devices (106B-106D) by the first device (106A) is performed at a data link layer.

11. The method of any preceding claim, wherein the first device (106A) reconfigures and/or unconfigures one or more configured devices (106B-106E).

12. A system for configuring one or more devices (106) installed at a respective floor (104) of a building (102), the system comprising:
- a mobile device (108) operated by a person (110) configured to establish a connection with a first device (106A) that is selected by the person (110) from one or more devices (106) installed at the respective floor (104) of the building (102) over a short-range network (112); and
- the first device (106A) configured to:
after the mobile device connects with the first device, determine one or more unconfigured devices (106B-106D) by broadcasting a discover message over the short-range network (112);
receive an identity message from the one or more unconfigured devices (106B-106D) in response to the discover message; and
configure the one or more unconfigured devices (106B-106D) in response to receiving the identity message.

13. The system of claim 12, wherein the system is configured to carry out the method steps in any of claims 1 to 11.

14. A computer readable medium for configuring one or more devices (106) installed at a respective floor (104) of a building (102), the computer readable medium comprising one or more processors and a memory coupled to the one or more processors, the memory storing instructions executed by the one or more processors, the one or more processors configured to:
connect a first device (106A) that is selected by a person (110) from one or more devices (106) installed at the respective floor (104) of the building (102) to a mobile device (108) operated by the person (110) over a short-range network (112);
after the mobile device connects with the first device, determine one or more unconfigured devices (106B-106D) by broadcasting a discover message by the first device (106A) over the short-range network (112);
receive an identity message from the one or more unconfigured devices (106B-106D) in response to the discover message; and
configure the one or more unconfigured devices (106B-106D) over the short-range network (112) in response to receiving the identity message.

## Patentansprüche

1. Verfahren zur Konfiguration einer oder mehrerer Vorrichtungen (106), die auf einem jeweiligen Stockwerk (104) eines Gebäudes (102) installiert sind, wobei das Verfahren umfasst:
- durch eine mobile Vorrichtung (108), die von einer Person (110) bedient wird, Herstellen einer Verbindung mit einer ersten Vorrichtung (106A), die von der Person (110) aus einer oder mehreren auf dem jeweiligen Stockwerk (104) des Gebäudes (102) installierten Vorrichtungen (106) ausgewählt wird, über ein Kurzstreckennetzwerk (112);
- nachdem sich die mobile Vorrichtung mit der ersten Vorrichtung verbunden hat, Bestimmen einer oder mehrerer nicht konfigurierter Vorrichtungen (106B-106D) durch Ausstrahlen einer Discover-Nachricht durch die erste Vorrichtung (106A) über das Kurzstreckennetzwerk (112);
- Empfangen einer Identitätsnachricht von der einen oder den mehreren nicht konfigurierten Vorrichtungen (106B-106D) als Reaktion auf die Discover-Nachricht; und
- Konfigurieren der einen oder der mehreren nicht konfigurierten Vorrichtungen (106B-106D) über das Kurzstreckennetzwerk (112) als Reaktion auf die Bestimmung der einen oder der mehreren nicht konfigurierten Vorrichtungen (106B-106D).

2. Verfahren nach Anspruch 1, umfassend Ermöglichen, dass die erste Vorrichtung (106A) die eine oder die mehreren nicht konfigurierten Vorrichtungen (106B-106D) durch Ausstrahlen der Entdeckungsnachricht durch die erste Vorrichtung (106A) über das Kurzstreckennetzwerk (112) bestimmt, und Ermöglichen, dass die erste Vorrichtung (106A) die eine oder die mehreren nicht konfigurierten Vorrichtungen (106B-106D) über das Kurzstreckennetzwerk (112) als Reaktion auf die Bestimmung der einen oder der mehreren nicht konfigurierten Vorrichtungen (106B-106D) konfiguriert.

3. Verfahren nach Anspruch 1 oder 2, umfassend Kommunizieren mit der ersten Vorrichtung (106A) und der einen oder den mehreren nicht konfigurierten Vorrichtungen (106B-106D) mit unterschiedlichen Broadcast- und/oder Unicast-Befehlen über das Kurzstreckennetzwerk (112), wobei die Broadcast- und/oder Unicast-Befehle über einen Datenrahmen übertragen werden, um die eine oder die mehreren nicht konfigurierten Vorrichtungen (106B-106D) zu konfigurieren.

4. Verfahren nach einem der vorhergehenden Ansprüche, wobei das Kurzstreckennetzwerk (112) ein Wi-Fi-Netzwerk ist.

5. Verfahren nach einem der vorhergehenden Ansprüche, wobei die erste Vorrichtung (106A) eine verschlüsselte Konfigurationsinformation an die eine oder mehreren nicht konfigurierten Vorrichtungen (106B-106D) zum Konfigurieren der einen oder mehreren nicht konfigurierten Vorrichtungen (106B-106D) überträgt, wobei die eine oder die mehreren nicht konfigurierten Vorrichtungen (106B-106D) die verschlüsselte Konfigurationsinformation entschlüsseln.

6. Verfahren nach einem der vorhergehenden Ansprüche, umfassend Empfangen einer Bestätigungsnachricht nach dem Konfigurieren der einen oder der mehreren nicht konfigurierten Vorrichtungen (106B-106D) und/oder Ändern von einem nicht konfigurierten Zustand in einen konfigurierten Zustand der einen oder der mehreren nicht konfigurierten Vorrichtungen (106B-106D) nach dem Konfigurieren der einen oder der mehreren nicht konfigurierten Vorrichtungen (106B-106D).

7. Verfahren nach einem der vorhergehenden Ansprüche, umfassend Ermöglichen, dass die erste Vorrichtung (106A) einen Blink-Befehl an eine oder mehrere konfigurierte Vorrichtungen (106B-106E) überträgt, um die konfigurierten Vorrichtungen (106B-106E) zu lokalisieren oder zu identifizieren.

8. Verfahren nach einem der vorhergehenden Ansprüche, wobei die erste Vorrichtung (106A) mit einem Kurzstreckennetzwerk-Dongle zum Kommunizieren mit der mobilen Vorrichtung (108) über das Kurzstreckennetzwerk (112) verbunden ist.

9. Verfahren nach einem der vorhergehenden Ansprüche, wobei die erste Vorrichtung (106A) die eine oder die mehreren nicht konfigurierten Vorrichtungen (106B-106D) gleichzeitig und/oder iterativ über das Kurzstreckennetzwerk (112) konfiguriert.

10. Verfahren nach einem der vorhergehenden Ansprüche, wobei, wenn die erste Vorrichtung (106A) eine nicht konfigurierte Vorrichtung ist, die mobile Vorrichtung (108) zuerst die erste Vorrichtung (106A) konfiguriert; und wobei die Konfiguration der ersten Vorrichtung (106A) durch die mobile Vorrichtung (108) und die Konfiguration der einen oder der mehreren nicht konfigurierten Vorrichtungen (106B-106D) durch die erste Vorrichtung (106A) an einer Datenverbindungsschicht durchgeführt wird.

11. Verfahren nach einem der vorhergehenden Ansprüche, wobei die erste Vorrichtung (106A) eine oder mehrere konfigurierte Vorrichtungen (106B-106E) neu konfiguriert und/oder deren Konfiguration umkehrt.

12. System zur Konfiguration einer oder mehrerer Vorrichtungen (106), die auf einem jeweiligen Stockwerk (104) eines Gebäudes (102) installiert sind, wobei das System umfasst:
- eine mobile Vorrichtung (108), die von einer Person (110) bedient wird und die dazu konfiguriert ist, eine Verbindung mit einer ersten Vorrichtung (106A) herzustellen, die von der Person (110) aus einer oder mehreren auf dem jeweiligen Stockwerk (104) des Gebäudes (102) installierten Vorrichtungen (106) ausgewählt wird, über ein Kurzstreckennetzwerk (112); und
- wobei die erste Vorrichtung (106A) konfiguriert ist zum:
nachdem sich die mobile Vorrichtung mit der ersten Vorrichtung verbunden hat, Bestimmen einer oder mehrerer nicht konfigurierter Vorrichtungen (106B-106D) durch Ausstrahlen einer Discover-Nachricht über das Kurzstreckennetzwerk (112);
Empfangen einer Identitätsnachricht von der einen oder den mehreren nicht konfigurierten Vorrichtungen (106B-106D) als Reaktion auf die Discover-Nachricht; und
Konfigurieren der einen oder der mehreren nicht konfigurierten Vorrichtungen (106B-106D) als Reaktion auf das Empfangen der Identitätsnachricht.

13. System nach Anspruch 12, wobei das System dazu konfiguriert ist, die Verfahrensschritte nach einem der Ansprüche 1 bis 11 durchzuführen.

14. Computerlesbares Medium zur Konfiguration einer oder mehrerer Vorrichtungen (106), die auf einem jeweiligen Stockwerk (104) eines Gebäudes (102) installiert sind, wobei das computerlesbare Medium einen oder mehrere Prozessoren und einen Speicher, der an den einen oder die mehreren Prozessoren gekoppelt ist, umfasst, wobei der Speicher Anweisungen speichert, die durch den einen oder die mehreren Prozessoren ausgeführt werden, wobei der eine oder die mehreren Prozessoren konfiguriert sind zum:
Verbinden einer ersten Vorrichtung (106A), die von einer Person (110) aus einer oder mehreren auf dem jeweiligen Stockwerk (104) des Gebäudes (102) installierten Vorrichtungen (106) ausgewählt wird, mit einer mobilen Vorrichtung (108), die von der Person (110) bedient wird, über ein Kurzstreckennetzwerk (112);
nachdem sich die mobile Vorrichtung mit der ersten Vorrichtung verbunden hat, Bestimmen einer oder mehrerer nicht konfigurierter Vorrichtungen (106B-106D) durch Ausstrahlen einer Discover-Nachricht durch die erste Vorrichtung (106A) über das Kurzstreckennetzwerk (112);
Empfangen einer Identitätsnachricht von der einen oder den mehreren nicht konfigurierten Vorrichtungen (106B-106D) als Reaktion auf die Discover-Nachricht; und
Konfigurieren der einen oder der mehreren nicht konfigurierten Vorrichtungen (106B-106D) über das Kurzstreckennetzwerk (112) als Reaktion auf das Empfangen der Identitätsnachricht.

## Revendications

1. Procédé de configuration d'un ou de plusieurs dispositifs (106) installés à un étage respectif (104) d'un bâtiment (102), le procédé comprenant :
- l'établissement d'une connexion par un dispositif mobile (108) utilisé par une personne (110) avec un premier dispositif (106A) qui est sélectionné par la personne (110) parmi un ou plusieurs dispositifs (106) installés à l'étage respectif (104) du bâtiment (102) sur un réseau à courte portée (112) ;
- après que le dispositif mobile s'est connecté au premier dispositif, la détermination d'un ou de plusieurs dispositifs non configurés (106B-106D) en diffusant un message de découverte par le premier dispositif (106A) sur le réseau à courte portée (112) ;
- la réception d'un message d'identité provenant d'un ou de plusieurs dispositifs non configurés (106B-106D) en réponse au message de découverte ; et
- la configuration d'un ou de plusieurs dispositifs non configurés (106B-106D) sur le réseau à courte portée (112) en réponse à la détermination d'un ou de plusieurs dispositifs non configurés (106B-106D).

2. Procédé selon la revendication 1, comprenant l'activation du premier dispositif (106A) pour déterminer l'un ou les plusieurs dispositifs non configurés (106B-106D) en diffusant le message de découverte par le premier dispositif (106A) sur le réseau à courte portée (112) et l'activation du premier dispositif (106A) pour configurer l'un ou les plusieurs dispositifs non configurés (106B-106D) sur le réseau à courte portée (112) en réponse à la détermination de l'un ou des plusieurs dispositifs non configurés (106B-106D).

3. Procédé selon la revendication 1 ou 2, comprenant la communication avec le premier dispositif (106A) et les un ou plusieurs dispositifs non configurés (106B-106D) avec différentes commandes de diffusion et/ou de monodiffusion sur le réseau à courte portée (112), dans lequel les commandes de diffusion et/ou de monodiffusion sont transmises sur une trame de données pour configurer l'un ou les plusieurs dispositifs non configurés (106B-106D).

4. Procédé selon une quelconque revendication précédente, dans lequel le réseau à courte portée (112) est un réseau Wi-Fi.

5. Procédé selon une quelconque revendication précédente, dans lequel le premier dispositif (106A) transmet des informations de configuration chiffrées à l'un ou aux plusieurs dispositifs non configurés (106B-106D) pour configurer l'un ou les plusieurs dispositifs non configurés (106B-106D), dans lequel l'un ou les plusieurs dispositifs non configurés (106B-106D) déchiffrent les informations de configuration chiffrées.

6. Procédé selon une quelconque revendication précédente, comprenant la réception d'un message d'accusé de réception après la configuration de l'un ou des plusieurs dispositifs non configurés (106B-106D) et/ou le passage d'un état non configuré à un état configuré de l'un ou des plusieurs dispositifs non configurés (106B-106D) après la configuration de l'un ou des plusieurs dispositifs non configurés (106B-106D).

7. Procédé selon une quelconque revendication précédente, comprenant l'activation du premier dispositif (106A) pour transmettre une commande de clignotement à un ou plusieurs dispositifs configurés (106B-106E) pour localiser ou identifier les dispositifs configurés (106B-106E).

8. Procédé selon une quelconque revendication précédente, dans lequel le premier dispositif (106A) est connecté à une clé de réseau à courte portée pour communiquer avec le dispositif mobile (108) sur le réseau à courte portée (112).

9. Procédé selon une quelconque revendication précédente, dans lequel le premier dispositif (106A) configure l'un ou les plusieurs dispositifs non configurés (106B-106D) simultanément et/ou de manière itérative sur le réseau à courte portée (112).

10. Procédé selon une quelconque revendication précédente, dans lequel, si le premier dispositif (106A) est un dispositif non configuré, le dispositif mobile (108) configure d'abord le premier dispositif (106A) ; et dans lequel la configuration du premier dispositif (106A) par le dispositif mobile (108) et la configuration de l'un ou des plusieurs dispositifs non configurés (106B-106D) par le premier dispositif (106A) sont effectuées au niveau d'une couche de liaison de données.

11. Procédé selon une quelconque revendication précédente, dans lequel le premier dispositif (106A) reconfigure et/ou déconfigure un ou plusieurs dispositifs configurés (106B-106E).

12. Système de configuration d'un ou de plusieurs dispositifs (106) installés à un étage respectif (104) d'un bâtiment (102), le système comprenant :
- un dispositif mobile (108) utilisé par une personne (110) configuré pour établir une connexion avec un premier dispositif (106A) qui est sélectionné par la personne (110) parmi un ou plusieurs dispositifs (106) installés à l'étage respectif (104) du bâtiment (102) sur un réseau à courte portée (112) ; et
- le premier dispositif (106A), configuré pour :
après que le dispositif mobile s'est connecté avec le premier dispositif, déterminer un ou plusieurs dispositifs non configurés (106B-106D) en diffusant un message de découverte sur le réseau à courte portée (112) ;
recevoir un message d'identité provenant d'un ou de plusieurs dispositifs non configurés (106B-106D) en réponse au message de découverte ; et
configurer l'un ou les plusieurs dispositifs non configurés (106B-106D) en réponse à la réception du message d'identité.

13. Système selon la revendication 12, dans lequel le système est configuré pour exécuter les étapes du procédé selon l'une quelconque des revendications 1 à 11.

14. Support lisible par ordinateur pour configurer un ou plusieurs dispositifs (106) installés à un étage respectif (104) d'un bâtiment (102), le support lisible par ordinateur comprenant un ou plusieurs processeurs et une mémoire couplée aux un ou plusieurs processeurs, la mémoire stockant des instructions exécutées par les un ou plusieurs processeurs, les un ou plusieurs processeurs étant configurés pour :
connecter un premier dispositif (106A) qui est sélectionné par une personne (110) parmi un ou plusieurs dispositifs (106) installés à l'étage respectif (104) du bâtiment (102) à un dispositif mobile (108) utilisé par la personne (110) sur un réseau à courte portée (112) ;
après que le dispositif mobile s'est connecté au premier dispositif, déterminer un ou plusieurs dispositifs non configurés (106B-106D) en diffusant un message de découverte par le premier dispositif (106A) sur le réseau à courte portée (112) ;
recevoir un message d'identité provenant d'un ou de plusieurs dispositifs non configurés (106B-106D) en réponse au message de découverte ; et
configurer l'un ou les plusieurs dispositifs non configurés (106B-106D) sur le réseau à courte portée (112) en réponse à la réception du message d'identité.
